# EUROPEAN PATENT APPLICATION

(11) **EP 4 653 278 A1**
(43) Date of publication of application: **26.11.2025**
(21) Application number: 23917299.2
(22) Date of filing: 20.12.2023
(51) Int. Cl.: B60W 20/15, B60W 10/06, B60W 10/08, B60L 50/10, F02D 29/06

(54) **RANGE EXTENDER STARTING METHOD**

(30) Priority: 18.01.2023 CN 202310076310
(71) Applicant: Seres Automobile Co., Ltd, Chongqing 400000 (CN)
(72) Inventor: SUN, Hongchun, Chongqing 401135 (CN); CHANG, Jian, Chongqing 401135 (CN); LIANG, Zongfeng, Chongqing 401135 (CN); CAI, Yongming, Chongqing 401135 (CN); FU, You, Chongqing 401135 (CN); ZOU, Yongbo, Chongqing 401135 (CN)
(74) Representative: Schulz Junghans Patentanwälte PartGmbB
(86) International application number: PCT/CN2023/140047
(87) International publication number: WO 2024/152832

(57) **Abstract**

A range extender starting method is disclosed. The method includes: acquiring, by a vehicle control unit, a current water temperature and a current rotation speed of an engine (S101); acquiring, by the vehicle control unit, a corresponding first torque value according to the current water temperature and the current rotation speed (S102); acquiring, by the vehicle control unit, a second torque value according to a difference value between the current rotation speed and a target rotation speed of the engine (S103); acquiring, by the vehicle control unit, a sum value of the first torque value and the second torque value as a current target torque value (S 104); controlling, by a generator control unit, a generator to respond to the target torque value (S105); determining, by an engine control unit, whether a rotation speed of the engine reaches the target rotation speed (S106); and re-executing previous steps when the engine control unit determines that the rotation speed of the engine does not reach the target rotation speed, and controlling, by the engine control unit, an actuator to inject fuel for ignition when the engine control unit determines that the rotation speed of the engine reaches the target rotation speed (S107).

## Description

This application claims priority to Chinese Patent Application No. 202310076310.0, filed on January 18, 2023 in China National Intellectual Property Administration, which is hereby incorporated by reference in its entirety.

### FIELD

The present application relates to the technical field of hybrid electric vehicles, for example, to a range extender starting method.

### BACKGROUND

A range extender generally refers to a part of an electric vehicle that can provide additional electric energy to extend a range of the electric vehicle. In the traditional sense, the range extender is a combination of an engine and a generator. An extended-range electric vehicle is an electric vehicle that uses other energy sources (such as gasoline) to replenish electric energy when a battery level is low. A main working characteristic (concept) of the electric vehicle is that in most cases (high probability), the electric vehicle works in an electric vehicle mode, and in rare cases (low probability), the electric vehicle works in an extended-range mode. In some embodiments, electric energy generated by the range extender is supplied to a motor for driving through a battery, and is also supplied to the battery for charging.

According to a range extender starting policy, a vehicle control unit (VCU) sends a starting instruction to a generator control unit (GCU) and an engine control unit (ECU). Then, the GCU enters a torque mode, and the VCU sends a torque instruction to the GCU in real time. The GCU controls a generator to respond to a torque request of the VCU and drag an engine to rotate. After reaching a target rotation speed α, the ECU controls a corresponding actuator to inject fuel for ignition, and the GCU switches to a rotation speed mode, thereby completing starting. Under this starting policy, the torque request sent by the VCU often starts from zero, and is obtained by PID (Proportional-Integral-Derivative) calculation according to a difference value between an actual rotation speed and the target rotation speed. Therefore, a starting process is slow.

### SUMMARY

In view of this, embodiments of the present application provide a range extender starting method, to resolve the problem there is a slow starting process when a range extender is started by using a conventional range extender starting policy.

Some embodiments of the present application provide a range extender starting method, including:
S101: acquiring, by a vehicle control unit, a current water temperature and a current rotation speed of an engine;
S102: acquiring, by the vehicle control unit, a corresponding first torque value according to the current water temperature and the current rotation speed;
S103: acquiring, by the vehicle control unit, a second torque value according to a difference value between the current rotation speed and a target rotation speed of the engine;
S104: acquiring, by the vehicle control unit, a sum value of the first torque value and the second torque value as a current target torque value;
S105: controlling, by a generator control unit, a generator to respond to the target torque value;
S106: determining, by an engine control unit, whether a rotation speed of the engine reaches the target rotation speed, and
re-executing step S101 when the engine control unit determines that the rotation speed of the engine does not reach the target rotation speed; and
S107: controlling, by the engine control unit, an actuator to inject fuel for ignition when the engine control unit determines that the rotation speed of the engine reaches the target rotation speed.

In some implementations, the acquiring, by the vehicle control unit, a corresponding first torque value according to the current water temperature and the current rotation speed includes:
acquiring, by the vehicle control unit, a corresponding relationship among a water temperature, a torque, and the first torque value; and
acquiring, by the vehicle control unit, the first torque value corresponding to the current water temperature and the current rotation speed according to the corresponding relationship.

In some implementations, before the acquiring, by the vehicle control unit, a corresponding relationship among a water temperature, a torque, and the first torque value, the method further includes:
acquiring a plurality of first preset water temperatures and a plurality of preset torque values;
respectively acquiring, for each of the first preset water temperatures, a changed rotation speed in a starting process of the engine and a starting evaluation parameter of the engine when an output torque of the generator is maintained as each of the plurality of preset torque values; and
determining a first corresponding relationship among the first preset water temperature, the preset torque value, and the rotation speed as the corresponding relationship according to the starting evaluation parameter.

In some implementations, the starting evaluation parameter includes a rotation speed overshoot, a starting time, and/or a stable convergence speed.

In some implementations, a minimum value of the first preset water temperature is a temperature value between -50°C and -30°C; and/or
an interval between the adjacent first preset water temperatures is an interval value between 3°C and 10°C.

In some implementations, a difference value between the adjacent preset torque values is a numerical value between 3 N•m and 10 N•m.

In some implementations, before the acquiring, by the vehicle control unit, a corresponding relationship among a water temperature, a torque, and the first torque value, the method further includes:
acquiring a plurality of second preset water temperatures;
for each of the second preset water temperatures, in an operation process of the engine, if the water temperature of the engine reaches the second preset water temperature, stopping driving the engine and testing reverse drag torques of the engine at different rotation speeds; and
acquiring third torque values corresponding to different rotation speeds of the engine at the second preset water temperature according to the reverse drag torques, and establishing a second corresponding relationship among the second preset water temperature, the rotation speed, and the third torque values as the corresponding relationship.

In some implementations, the acquiring third torque values corresponding to different rotation speeds of the engine at the second preset water temperature according to the reverse drag torques includes:
multiplying the reverse drag torques by a preset coefficient to obtain the third torque values.

In some implementations, the acquiring, by the vehicle control unit, a second torque value according to a difference value between the current rotation speed and a target rotation speed of the engine includes:
acquiring, by the vehicle control unit, the second torque value by performing Proportional-Integral-Derivative (PID) calculation on the difference value.

According to the range extender starting method provided by some embodiments of the present application, a new manner of calculating a torque for a range extender starting process is provided, whereby a torque baseline (i.e. a first torque value) is provided for torque adjustment of the starting process, an adjustment range is narrowed, and the starting process can realize convergence more quickly. In addition, the first torque value is determined based on a current water temperature and a current rotation speed of an engine. In some embodiments, the starting process can adapt to starting under various working conditions, and a better NVH experience can be obtained under all working conditions. These embodiments of the present application solve the shortcomings of slow convergence and insufficient coverage of working conditions of a range extender starting policy.

### BRIEF DESCRIPTION OF THE DRAWINGS

Fig. 1 is a schematic flowchart of a range extender starting method according to some embodiments of the present application;
Fig. 2 is a schematic flowchart of another range extender starting method according to some embodiments of the present application; and
Fig. 3 is a schematic flowchart of still another range extender starting method according to some embodiments of the present application.

### DETAILED DESCRIPTION

To clearly state the objectives, technical solutions, and advantages of embodiments of the present application, the technical solutions in the embodiments of the present application will be clearly and completely described below with reference to the accompanying drawings in the embodiments of the present application.

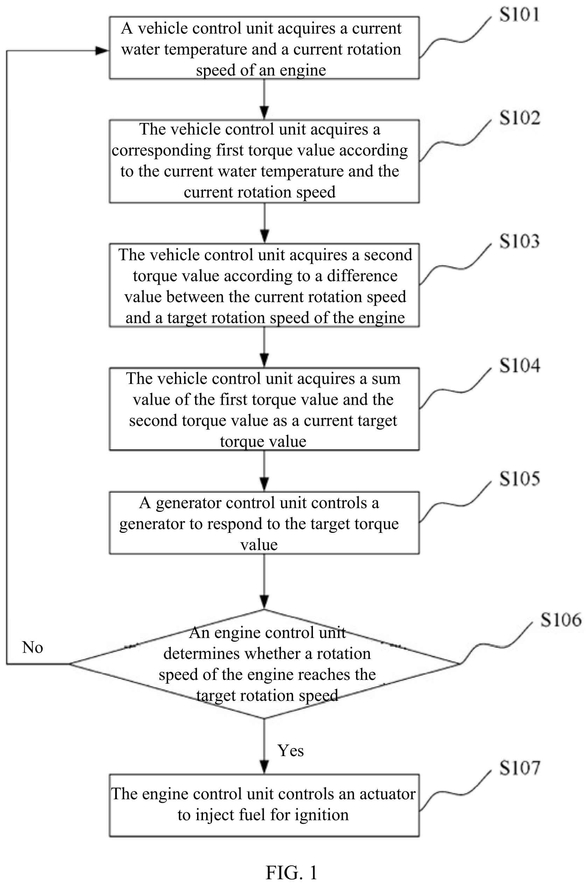

Referring to Fig. 1, some embodiments of the present application provide a range extender starting method, including:
S101: A vehicle control unit acquires a current water temperature and a current rotation speed of an engine.

Before this step, the vehicle control unit may send a range extender starting instruction to a generator control unit and an engine control unit, and the generator control unit enters a torque mode.

The vehicle control unit is a main control unit of a power system in a vehicle, and is responsible for managing an entire powertrain, and determining torque distribution of an engine and a motor, turn-on and off of high-voltage power, engine start or stop, enabling of accessories, and other operations according to a driving intention of a driver, a driving state of the vehicle, and operating states of various components of the vehicle (including the engine, a transmission, the motor, a battery, and the like).

In some embodiments, the vehicle control unit collects various switch and sensor signals related to vehicle control. Through the instruction and data interaction of a CAN (Controller Area Network) bus, coordinated control of the engine control unit, a transmission control unit (TCU), a battery management system (BMS), and a motor controller is realized. Start of accessories such as the motor, a fan, and a water pump is controlled by a plurality of relays. In addition, high energy efficiency can be achieved through driving charging and braking energy recovery.

S102: The vehicle control unit acquires a corresponding first torque value according to the current water temperature and the current rotation speed.

S103: The vehicle control unit acquires a second torque value according to a difference value between the current rotation speed and a target rotation speed of the engine.

S104: The vehicle control unit acquires a sum value of the first torque value and the second torque value as a current target torque value.

After obtaining the target torque value, the vehicle control unit sends the target torque value to a generator control unit.

S105: A generator control unit controls a generator to respond to the target torque value.

S106: An engine control unit determines whether a rotation speed of the engine reaches the target rotation speed.

Step S101 is re-executed when the engine control unit determines that the rotation speed of the engine does not reach the target rotation speed.

S107: The engine control unit controls an actuator to inject fuel for ignition when the engine control unit determines that the rotation speed of the engine reaches the target rotation speed. After the ignition is successful, the generator control unit enters a rotation speed mode.

According to the range extender starting method provided by some embodiments of the present application, a new manner of calculating a torque for a range extender starting process is provided, whereby a torque baseline (i.e. a first torque value) is provided for torque adjustment of the starting process, an adjustment range is narrowed, and the starting process can realize convergence more quickly. In other words, compared with a conventional range extender starting technology in which a torque responded by a generator starts from zero and the torque required to respond by the generator is calculated only according to a difference value between an actual rotation speed and a target rotation speed, a torque required to respond by the generator in some embodiments of the present application starts from the first torque value. Based on this, the second torque value is acquired according to the difference value between the current rotation speed and the target rotation speed of the engine as the torque required to respond by a current generator. In addition, the first torque value is determined based on the current water temperature and the current rotation speed of the engine. In some embodiments, the starting process can adapt to starting under various working conditions, and a better NVH (Noise, Vibration, Harshness) experience can be obtained under all working conditions. Some embodiments of the present application solve shortcomings of slow convergence and insufficient coverage of working conditions of a range extender starting policy.

In some implementations, that the vehicle control unit acquires a corresponding first torque value according to the current water temperature and the current rotation speed includes:
The vehicle control unit acquires a corresponding relationship among a water temperature, a torque, and the first torque value.

The vehicle control unit acquires the first torque value corresponding to the current water temperature and the current rotation speed according to the corresponding relationship.

The corresponding relationship may be recorded in a corresponding relationship table.

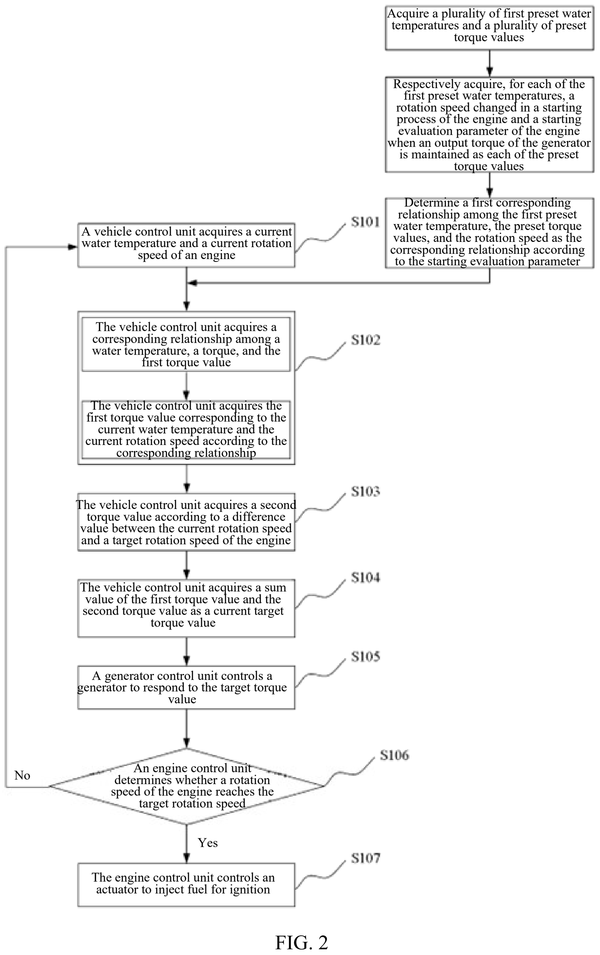

In some implementations, referring to Fig. 2, before the vehicle control unit acquires a corresponding relationship among a water temperature, a torque, and the first torque value, the method further includes:
acquiring first preset water temperatures and preset torque values;
respectively acquiring, for each of the first preset water temperatures, a rotation speed changed in a starting process of the engine and a starting evaluation parameter of the engine when an output torque of the generator is maintained as each of the preset torque values; and
determining a first corresponding relationship among the first preset waters temperature, the preset torque values, and the rotation speed as the corresponding relationship according to the starting evaluation parameter.

In some embodiments of the present application, an optimal torque value corresponding to the water temperature and the rotation speed is acquired through actual testing.

The starting evaluation parameter includes a rotation speed overshoot, a starting time, and/or a stable convergence speed.

For each combination of each of the first preset water temperatures and the rotation speed, a preset torque value corresponding to a minimum starting time is selected as an optimal preset torque value. If there are preset torque values corresponding to the minimum starting time, a preset torque value corresponding to a minimum rotation speed overshoot is selected as the optimal preset torque value from the preset torque values. In this case, if there are still preset torque values corresponding to the minimum starting time, a preset torque value corresponding to a highest stable convergence speed is selected as the optimal preset torque value.

In some embodiments, for each combination of each of the first preset water temperatures and the rotation speed, a weighted sum of the rotation speed overshoot, the starting time, and/or the stable convergence speed corresponding to each preset torque value is calculated, and a preset torque value corresponding to a minimum weighted sum is selected as the optimal torque value. Weights of the starting time, the rotation speed overshoot, and the stable convergence speed are reduced in sequence.

For each combination of the first preset water temperature and the rotation speed, after the corresponding optimal preset torque value is determined, the first corresponding relationship among the first preset water temperature, the rotation speed, and the preset torque value is established.

In some implementations, a minimum value of the first preset water temperature is a temperature value between -50°C and -30°C; and/or
an interval between adjacent first preset water temperatures is an interval value between 3°C and 10°C.

In some implementations, a difference value between adjacent preset torque values is a numerical value between 3 N•m and 10 N•m.

For example, a set of data may be tested every 5°C starting from -40°C. The set of data includes: a changed rotation speed and a starting evaluation parameter of the engine in a process of starting the engine by respectively maintaining the output torque of the generator as a preset torque value, where there are a plurality of preset torque values, a minimum value is 0 N•m, a maximum value is 100 N•m, and an interval between adjacent preset torque values is 5 N•m. Then, according to the duration of the starting time (time from starting to convergence and stabilization of the rotation speed at a target value is defined as the starting time) (a shorter time is preferred, but the rotation speed overshoot needs to be less than 300 rpm), optimal preset torque values corresponding to different temperatures and different rotation speeds are selected, and a corresponding relationship table is formed. Finally, the corresponding relationship table may be written into a program of the vehicle control unit.

In addition, the test may not be a vehicle test, but an engine and generator test in a production stage. In this way, the water temperature of the engine may be controlled by a water temperature adjustment device, thereby avoiding influence on accuracy of test results caused by continuous increase of the water temperature in the starting process of the engine.

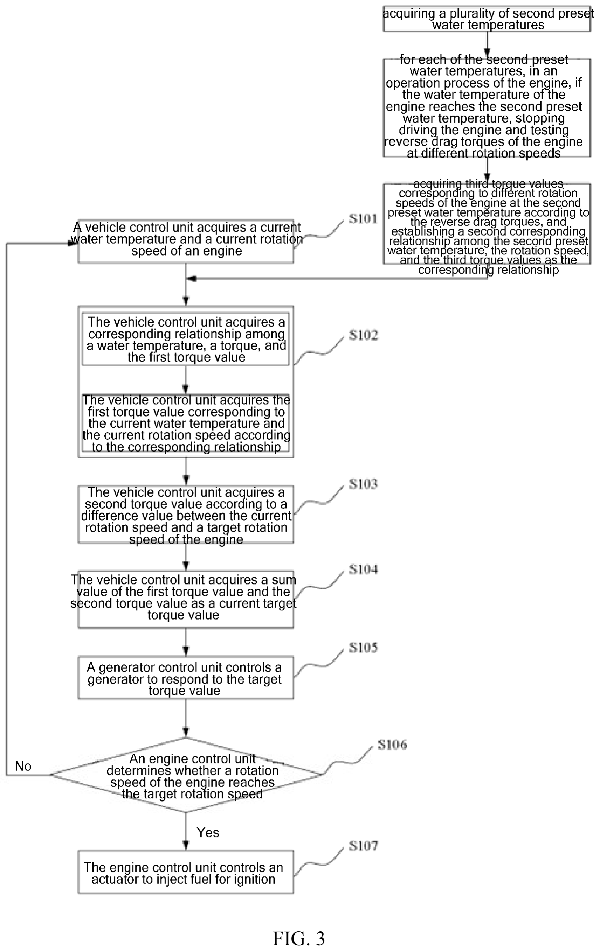

In some other implementations, referring to Fig. 3, before the vehicle control unit acquires a corresponding relationship among a water temperature, a torque, and the first torque value, the method further includes:
acquiring a plurality of second preset water temperatures;
for each of the second preset water temperatures, in an operation process of the engine, if the water temperature of the engine reaches the second preset water temperature, stopping driving the engine and testing reverse drag torques of the engine at different rotation speeds, where the reverse drag torque may be measured by an electric dynamometer; and
acquiring third torque values corresponding to different rotation speeds of the engine at the second preset water temperature according to the reverse drag torques, and establishing a second corresponding relationship among the second preset water temperature, the rotation speed, and the third torque values as the corresponding relationship.

In some embodiments of the present application, optimal torque values corresponding to the water temperature and the rotation speed are also obtained by testing. However, different from the foregoing embodiment, torque values corresponding to each water temperature and rotation speed are obtained by testing reverse drag torques corresponding to different rotation speeds when the engine and the motor are stopped at different water temperatures.

In some implementations, the acquiring third torque values corresponding to different rotation speeds of the engine at the second preset water temperature according to the reverse drag torque includes:
multiplying the reverse drag torques by a preset coefficient to obtain the third torque values.

Because a main resistance of the starting process of the engine comes from a mechanical resistance of the engine, the setting of a starting torque value in some embodiments of the present application is strongly related to the resistance of the engine. The reverse drag torque reflects a resistance curve of the engine. A preset coefficient may be set from experience. Generally, a value is set from experience. Then, verification and fine-tuning are performed. The principle of verification and fine-tuning is still that the shortest starting time within a range that the rotation speed overshoot meets a requirement is optimal.

For example, the electric dynamometer may be used to warm up the engine from -40°C and stop every 5°C to test reverse drag torques at different speeds. Then, the measured reverse drag torque is multiplied by a preset coefficient Y to obtain the third torque value. Finally, a corresponding relationship table among a water temperature, a rotation speed, and a torque value is formed and written into a program of the vehicle control unit. If the water temperature is greater than a stop temperature at the current test by more than a certain value after a measurement is completed in a testing process, the water temperature is reduced by using a cooling device, or the water is naturally cooled to a certain temperature before a next temperature stop test is carried out, whereby the stop temperature at the current test may be a sum value of the temperature at the time of stopping at the current test and a temperature interval (5°C). However, if the water temperature is greater than the stop temperature at the current test by more than a certain value and the water is not cooled after the current measurement is completed, the water temperature at a next test may be greater than the foregoing sum value but not equal to the foregoing sum value, resulting in missing of test at the temperature corresponding to the sum value.

Certainly, the test in some embodiments of the present application may not be a vehicle test, but an engine and generator test in a production stage. In this way, the water temperature of the engine may be controlled by a water temperature adjustment device, whereby a stop temperature interval between two adjacent tests may be maintained as a preset temperature interval (5°C), thereby avoiding influence on a test progress due to a requirement of a cooling process for a next test caused by continuous increase of the water temperature in the starting process of the engine.

In the foregoing embodiment, the corresponding relationship among the water temperature, the rotation speed, and the torque obtained by the test is discrete. When the corresponding first torque value is actually acquired based on the current water temperature and the current rotation speed, if the current water temperature is not equal to any water temperature in the corresponding relationship and/or the current rotation speed is not equal to any rotation speed in the corresponding relationship, the first torque value corresponding to the current water temperature and the current rotation speed may be acquired by using an interpolation method.

The interpolation method is a polynomial interpolation method, which finds a point where an n-order polynomial curve passes through discrete water temperatures, rotation speeds, and corresponding torques, and then uses the n-order polynomial curve to calculate torques corresponding to other water temperatures and rotation speeds.

The embodiments of this specification are all described in a progressive manner. For same or similar parts in the embodiments, refer to each other. Descriptions of each embodiment focus on a difference from other embodiments.

A person skilled in the art will understand that all or part of the procedures in the method of the foregoing embodiment may be implemented by instructing related hardware using a computer program. The computer program may be stored in a computer-readable storage medium. The computer program, when executed, may include the procedures of the foregoing method embodiments. The storage medium may be a magnetic disk, an optical disk, a read-only memory (ROM), a random access memory (RAM), a flash memory, a hard disk drive (HDD), a solid-state drive (SSD), or the like. The storage medium may further include a combination of the memories of the foregoing types.

The foregoing descriptions are merely embodiments of the present application and are not intended to limit the present application. For those skilled in the art, the present application may have various changes and variations. Any modification, equivalent replacement, improvement, and the like made within the spirit and principle of the present application should be included within the scope of the claims of the present application.

## Claims

1. A range extender starting method, comprising:
S101: acquiring, by a vehicle control unit, a current water temperature and a current rotation speed of an engine;
S102: acquiring, by the vehicle control unit, a corresponding first torque value according to the current water temperature and the current rotation speed;
S103: acquiring, by the vehicle control unit, a second torque value according to a difference value between the current rotation speed and a target rotation speed of the engine;
S104: acquiring, by the vehicle control unit, a sum value of the first torque value and the second torque value as a current target torque value;
S105: controlling, by a generator control unit, a generator to respond to the target torque value;
S106: determining, by an engine control unit, whether a rotation speed of the engine reaches the target rotation speed, and
re-executing step S101 when the engine control unit determines that the rotation speed of the engine does not reach the target rotation speed; and
S107: controlling, by the engine control unit, an actuator to inject fuel for ignition when the engine control unit determines that the rotation speed of the engine reaches the target rotation speed.

2. The method according to claim 1, wherein the acquiring, by the vehicle control unit, a corresponding first torque value according to the current water temperature and the current rotation speed comprises:
acquiring, by the vehicle control unit, a corresponding relationship among a water temperature, a torque, and the first torque value; and
acquiring, by the vehicle control unit, the first torque value corresponding to the current water temperature and the current rotation speed according to the corresponding relationship.

3. The method according to claim 2, wherein before the acquiring, by the vehicle control unit, a corresponding relationship among a water temperature, a torque, and the first torque value, the method further comprises:
acquiring a plurality of first preset water temperatures and a plurality of preset torque values;
respectively acquiring, for each of the first preset water temperatures, a changed rotation speed in a starting process of the engine and a starting evaluation parameter of the engine when an output torque of the generator is maintained as each of the plurality of preset torque values; and
determining a first corresponding relationship among the first preset water temperature, the preset torque value, and the rotation speed as the corresponding relationship according to the starting evaluation parameter.

4. The method according to claim 3, wherein the starting evaluation parameter comprises a rotation speed overshoot, a starting time, and/or a stable convergence speed.

5. The method according to claim 3 or 4, wherein a minimum value of the first preset water temperature is a temperature value between -50°C and -30°C; and/or
an interval between the adjacent first preset water temperatures is an interval value between 3°C and 10°C.

6. The method according to claim 3 or 4, wherein a difference value between the adjacent preset torque values is a numerical value between 3 N•m and 10 N•m.

7. The method according to claim 2, wherein before the acquiring, by the vehicle control unit, a corresponding relationship among a water temperature, a torque, and the first torque value, the method further comprises:
acquiring a plurality of second preset water temperatures;
for each of the second preset water temperatures, in an operation process of the engine, if the water temperature of the engine reaches the second preset water temperature, stopping driving the engine and testing reverse drag torques of the engine at different rotation speeds; and
acquiring third torque values corresponding to different rotation speeds of the engine at the second preset water temperature according to the reverse drag torques, and establishing a second corresponding relationship among the second preset water temperature, the rotation speed, and the third torque values as the corresponding relationship.

8. The method according to claim 7, wherein the acquiring third torque values corresponding to different rotation speeds of the engine at the second preset water temperature according to the reverse drag torques comprises:
multiplying the reverse drag torques by a preset coefficient to obtain the third torque values.

9. The method according to claim 1, wherein the acquiring, by the vehicle control unit, a second torque value according to a difference value between the current rotation speed and a target rotation speed of the engine comprises:
acquiring, by the vehicle control unit, the second torque value by performing Proportional-Integral-Derivative (PID) calculation on the difference value.
